# EUROPÄISCHE PATENTSCHRIFT

(11) **EP 0 589 071 B1**
(45) Veröffentlichungstag und Bekanntmachung des Hinweises auf die Patenterteilung: **11.12.1996**
(21) Anmeldenummer: 92116060.2
(22) Anmeldetag: 19.09.1992
(51) Int. Cl.: B60R 22/10, B60N 2/28

(54) **Vorrichtung zum Festhalten eines Fahrgastes von niederer Statur an einem mit Sicherheitsgurt ausgerüsteten Fahrzeugsitz**
Safety device for anchoring a passenger short of stature to a vehicle seat provided with a safety belt
Dispositif pour retenir un passager de petite taille à un siège de véhicule équipé d'une ceinture de sécurité

(43) Veröffentlichungstag der Anmeldung: 30.03.1994
(73) Patentinhaber: Farinelli, Vittorio, I-10154 Torino (IT); Palazzolo, Caterina, I-10154 Torino (IT)
(72) Erfinder: Farinelli, Vittorio, I-10154 Torino (IT)
(74) Vertreter: Aprà, Mario

(56) Entgegenhaltungen:
- EP-A- 0 066 372
- DE-A- 2 923 125
- FR-A- 2 123 701

## Beschreibung

Die Erfindung betrifft eine Vorrichtung zum Festhalten eines Fahrgastes von niederer Statur an einem mit Sicherheitsgurt ausgerüsteten Fahrzeugsitz.

In der nachstehenden Beschreibung ist zwar auf das Festhalten eines Fahrgastes an einem Kraftfahrzeugsitz Bezug genommen, doch ist der Erfindungsbereich auch auf das Festhalten von Fahrgästen an Sitzen eines beliebigen anderen Fahrzeugs anwendbar.

Ausserdem wird hier als "Sicherheitsgut" ein solcher verstanden, bei dem wenigstens drei Anschlusspunkte an dem starren Aufbau eines Fahrzeugs und in von einem Fahrgast angelegten Zustand wenigstens ein schräg gerichteter Schultertrum und ein quer gerichteter Rumpftrum des Sicherheitsgurtes vorhanden sind.

Bei korrekt angelegtem Sicherheitsgurt verläuft der Schrägtrum an der Vorderseite des sitzenden Fahrgastes diagonal von der Schulter bis zur entgegengesetzten Hüfte, während der Quertrum zwar ebenfalls an der Vorderseite des Fahrgastes, jedoch quer von einer Hüfte zur anderen verläuft.

Die genormten Sicherheitsgurte sind zum Festhalten von erwachsenen Fahrgästen mit einer Statur von mehr als 1500 mm Höhe vorgesehen.

Für einen nicht erwachsenen bzw. klein gewachsenen Fahrgast, im Folgenden Fahrgast von niederer Statur genannt, sind derartige Sicherheitsgurte nicht nur lästig zum Anlegen, sondern sogar gefährlich, weil sie im Fall eines Fahrzeugunfalls auch zur Erdrosselung durch den Schrägtrum oder zur Quetschung der Bauchgegend durch den Quertrum führen können. Dies, weil bei einem Fahrgast von niederer Statur sei es einem Erwachsenen von kleiner Statur, sei es einem Kind die Trume des Sicherheitsgurtes gegenüber seinem Körper im sitzenden Zustand zu hoch liegen.

Daher ist einerseits für erwachsene Gäste von niederer Statur auf Grund der möglichen Gefahren das Anlegen eines solchen Sicherheitsgurtes nicht ratsam. Andrerseits sind für Kinden unter 12 Jahren eigene Vorrichtungen zum Festhalten am Sitz in Kraftfahrzeugen gesetzlich vorgeschrieben. Solche Vorrichtungen können unabhängig von dem Sicherheitsgurt des betreffenden Sitzes sein, wie es z.B. die kleinen Sicherheitssessel für Kinder sind, oder sie können mit dem vorhandenen Sicherheitsgurt kombiniert sein. In jedem Fall sind derartige Sicherheitseinrichtungen für Kinder nicht nur zweifelhaft wirksam, sondern auch platzraubend und umständlich zum In- und Ausserbetriebsetzen. Daher werden sie oft unnötig an einem Fahrzeugsitz angebracht belassen, auch wenn kein Kind anwesend ist. Ausserdem sind derartige Sicherheitseinrichtungen in Verschiedenen Grössen je nach Altersstufen des Kindes gefertigt, da sie den einzelnen Altersstufen von wenigen Monaten bis 12 Jahren nicht anpassbar sind und daher während der Kindheit öfters ausgetauscht werden müssen.

Überdies sind solche Einrichtungen oft aus billigem Material gefertigt und daher hygienisch und anatomisch unkontrolliert, was hingegen für die normalen Sitze und Sicherheitsgurte zugesichert ist.

Auch sind diese Sicherheitseinrichtungen umständlich zu säubern, was der Gesundheit des Kindes schaden kann.

Bekannt ist aus der EP-A-0 326 265 eine Vorrichtung zum Festhalten eines Fahrgastes von niederer Statur an einem mit Sicherheistgurt ausgerüsteten Fahrzeugsitz, wobei der angelegte Sicherheistgurt wenigstens einen schräg gerichteten Schultertrum und einen quer gerichteten Lendentrum bildet, und wobei die Vorrichtung eine Struktur aufweist, die zur seitlichen Abstützung und zur korrekten Sitzhaltung eines Fahrgastes von niederer Statur dient, an der Rückenlehne des Sitzes stabil verankert ist und eine Betriebsstellung einnehmen kann, bei der sie Mittel zum Ablenken des Schrägtrums und des Quertrums des angelegte Sicherheitsgurtes nach unten abhängig von der Höhe des Rumpfs und der Lage der Hüften des den Sitz besetzenden Fahrgastes von niederer Statur besitzt.

Ebenfalls bekannt ist ausserdem aus der DE-A-2 923 125 eine derartige gattungsbildende Vorrichtung, die dieselben technischen Merkmale der EP-A-0 326 265 aufweist, wobei es sich jedoch um keine vollständige Sitzschale handelt, insofern die Sitzfläche des normalen Fahrzeugsitzes immer zugänglich bleibt.

Derartige Vorrichtungen bieten jedoch einem erwachsenen Fahrgast von normaler oder höherer Statur keinen Platz zum korrekten Sitzen, ohne dass sie vollständig entfernt werden, damit ein erwachsener Fahrgast am normalen Sitz Platz nehmen kann.

Aus der FR-A-2 123 701 ist eine Vorrichtung zum Festhalten eines Fahrgastes von niederer Statur an einem mit Sicherheitsgurt versehenen Fahrzeugsitz bekannt, die in angelegtem Zustand wenigstens einen schräg gerichteten Schultertrum und einen quer gerichteten Lendentrum bildet. Diese Vorrichtung besitzt eine Struktur mit höhenmässig verstellbarer Kopfstütze sowie mit Mitteln zum Ablenken des Schrägtrums des angelegten Sicherheistgurtes nach unten abhängig von der Höhe des Rumpfes und der Lage der Hüften des den Sitz besetzenden Fahrgastes von niederer Statur.

Diese bekannte Vorrichtung ermöglicht jedoch keine seitliche Abstützung und korrekte Sitzhaltung eines Fahrgastes von niederer Statur am Sitz sowie keine Ablenkung des Lendentrums des angelegten Sicherheitsgurtes nach unten abhängig von der Lage der Hüften des den Sitz besetzenden Fahrgastes.

In Anbetracht dieser Nachteile liegt der Erfindung die Aufgabe zugrunde, dieselben zu beseitigen und eine Vorrichtung zum Festhalten eines Fahrgastes von niederer Statur an einem mit genormtem Sicherheitsgurt versehenen Fahrzeugsitz zu schaffen, die sicher und zu - verlässig im Betrieb, leicht in und ausser Betrieb setzbar, plastzsparend und einfach zu säubern ist.

Zur Lösung der gestellten Aufgabe sieht die Erfindung eine Vorrichtung zum Festhalten eines Fahrgastes von niederer Statur an einem mit genormtem Sicherheitsgurt versehenen Fahrzeugsitz vor, deren Wesensmerkmal Gegenstand des Hauptanspruchs ist, der als hier vollständig wiedergegeben zu verstehen ist.

Weitere Merkmale und Vorteile ergeben sich aus den Unteransprüchen, auf die hier ebenfalls in vollem Umfang Bezug genommen wird.

Nachstehend ist der Erfindungsgegenstand anhand der in der Zeichnung dargestellten Ausführungsbeispiele näher beschrieben. Es zeigen:
- Fig. 1: ein Schaubild in auseinandergezogenem Zustand einer ersten Ausführungsform der Erfindung, bei dem der Sicherheitsgurt nicht dargestellt ist;
- Fig. 2: eine vergrösserte Darstellung der Einzelheit II in Fig. 1;
- Fig. 3: eine Teilansicht von oben in Richtung des Pfeiles III in Fig. 2;
- Fig. 4 und 5: Schaubilder der erfindungsgemässen Vorrichtung an einem Kraftfahrzeugsitz, wobei die Haltemittel für den Quertrum des Sicherheitsgurtes eines Sitzes in Betriebs- bzw. in Ausgangsstellung dargestellt sind;
- Fig. 6: ein der Figur 4 ähnliches Schaubild derselben jedoch etwas geänderten Ausführungsform;
- Fig. 7: einen Schnitt gemäss der Linie VII-VII in Fig. 6 in vergrössertem Masstab;
- Fig. 8: ein Schaubild in auseinandergezogenem Zustand einer zweiten Ausführungsform der erfindungsgemässen Vorrichtung;
- Fig. 9: eine Ansicht der Einzelheit IX in Fig. 8 in vergrössertem Masstab und in etwas geänderter Ausführung;
- Fig.10 bis 12: Schnitte gemäss den Linien X-X, XI-XI und XII-XII in Fig. 9 in vergrössertem Masstab;
- Fig. 13 und 14: Schaubilder der Vorrichtung gemäss Fig. 8 an einem Kraftfahrzeugsitz, wobei die Haltemittel für den Quer- und den Schrägtrum des Sicherheitsgurtes eines Sitzes in Betriebs- und in Ausgangsstellung dargestellt sind;
- Fig. 15: ein Schaubild in auseinandergezogenem Zustand einer dritten Ausführungsform der erfindungsgemässen Vorrichtung;
- Fig. 16: ein Schaubild der Vorrichtung nach Fig. 15 an einem Kraftfahrzeugsitz zum Festhalten eines Fahrgastes von niederer Statur;
- Fig. 17 u. 18: Teilschaubilder einer vierten und einer fünften Ausführungsform der erfindungsgemässen Vorrichtung;
- Fig. 19: ein Scheubild in auseinandergezogenem Zustand einer sechsten Ausführungsform der Erfindung, wobei der Sicherheitsgurt nicht eingezeichnet ist;
- Fig. 20 bis 23: Schnitte gemäss den Linien XX-XX, XXI-XXI, XXII-XXII bzw. XXIII-XXIII in Fig. 19 in grösserem Masstab;
- Fig. 24 u. 25: Schaubilder der Vorrichtung gemäss Fig. 19 an einem Kraftfahrzeugsitz, wobei die Haltemittel für den Quertrum des Sicherheitsgurtes in Betriebs- bzw. Ausgangsstellung dargestellt sind;
- Fig. 26: eine Ansicht von oben in Richtung des Pfeiles XXVI in Fig. 25 in grösserem Masstab;
- Fig. 27 u. 28: Schaubilder einer siebten Ausführungsform der erfindungsgemässen Vorrichtung an einem Kraftfahrzeugsitz, wobei die Haltemittel für den Quertrum und den Schrägtrum des Sicherheitsgurtes in Betriebs- bzw. Ausgangsstellung dargestellt sind;
- Fig. 29: eine Ansicht in grösserem Masstab und teilweise aufgeschnitten der Einzelheit XXIX in Fig. 28;
- Fig. 30: einen Schnitt gemäss der Linie XXX-XXX in Fig. 27 in grösserem Masstab, und
- Fig. 31: eine Seitenansicht einer Einzelheit in Richtung des Pfeiles XXX in Fig. 30.

In den Zeichnungen ist mit S ein Sitz eines Kraftfahrzeugs mit gepolsterter Sitzbank P, die den eigentlichen Fahrzeugsitz bildet, und mit gepolsterter Rückenlehne Sc bezeichnet. Mit C ist ein Kraftfahrzeug-Sicherheitsgurt bezeichnet, der dem Sitz S zugeordnet und in drei Punkten am starren Fahrzeugaufbau derart befestigt ist, dass bei von einem auf dem Sitz S befindlichen Fahrgast angelegtem Sicherheitsgurt C dieser Gurt einen schräg gerichteten Schultertrum C1 und einen quer gerichteten Lendentrum C2 bildet.

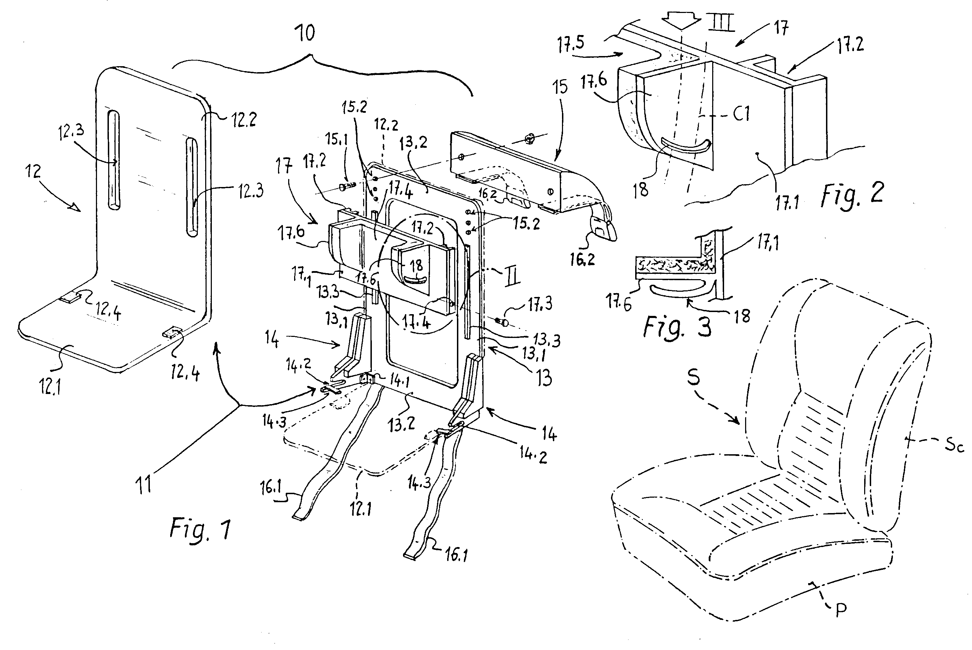

### Erste Ausführungsform: Fig. 1 - 5.

Mit 10 (Fig. 1) ist die erfindungsgemässe Vorrichtung zum Festhalten eines Fahrgastes von niederer Statur (z.B. eines 1 bis 12 Jahre alten Kindes) in Zusammenwirkung mit dem Sicherheitsgurt C am Fahrzeugsitz S in ihrem Ganzen bezeichnet.

Die Vorrichtung 10 umfasst einen abnehmbaren Sitzbezug 11. Der Sitzbezug 11 besteht aus einem Futter 12 z.B. aus Gewebe mit Polsterung, das seinerseits durch einen flexiblen Überzug als Decktuch 12.1 für die Sitzbank und einen Überzug als Decktuch 12.2 für die Rückenlehne Sc gebildet ist.

Das Decktuch 12.2 für die Rückenlehne ist durch einen rechteckigen Flachrahmen 13 z.B. aus leicht elastisch nachgiebigem Kunststoff zur anatomischen Abstützung gegen die Rückenlehne Sc verstärkt. Der Flachrahmen 13 weist zwei Seitenstege 13.1 und zwei Querstege 13.2 auf. Die Seitenstege 13.1 des Rahmens 13 besitzen geradlinige Längsrippen 13.3 (den Seitenstegen entlang verlaufend), die nach vorne vorstehen. Jede Rippe 13.3 wird in einem Längsschlitz 12.3 des Decktuchs 12.2 der Rückenlehne Sc aufgenommen.

Im Bereich des der Bank P benachbarten Querstegs 13.2 des Rahmens sind zwei kurze Seitenflügel 14 aus starren Blättern, z.B. aus Kunststoff, mit den Seitenflügeln 13.1 mittels biegsamer, zylinderförmiger Schar - niere 14.1 mit zu den Seitenstegen 13.1 paralleler Schwenkachse schwenkbar verbunden. Jeder Seitenflügel 14 ist zwischen einer gegen das Decktuch 12.2 und den Rahmen 13 geschwenkten Ausgangsstellung und einer um 90° oder mehr gegenüber der Ausgangsstellung geschwenkten Betriebsstellung, in der die Seitenflügel nach vorne gerichtet sind, verstellbar.

Die Seitenflügel 14 sind verkleidet und gepolstert, damit der sich auf dem Sitz befindliche Fahrgast beiderseits wie in einer Sitzschale bequem abgestützt wird.

Jeder Seitenflügel 14 weist ausserdem einen nach vorne offenen Einschnitt 14.2 auf. Die Einschnitte 14.2 verlaufen in gleicher Ebene im wesentlichen rechtwinklig zu den Achsen der Scharniere 14.1 und befinden sich in den Seitenflügeln 14 nahe der Sitzbank P.

Ausserdem besitzt jeder Seitenflügel 14 Mittel 14.3 zur lösbaren Befestigung am Decktuch 12.1 der Sitzbank P, wenn der Seitenflügel in Betriebsstellung steht. Diese Befestigungsmittel bestehen aus einem Stück Band "Velcro" (registrierte Bezeichnung), das mit dem Flügel 14 verbunden ist und in der Betriebsstellung des Flügels mit einem zugeordneten Bandstück "Velcro" 12.4 am Decktuch 12.1 zusammenwirkt.

Eine konsolenartig ausgebildete Stütze 15 ist über lösbare Befestigungsmittel, wie ein Paar Schrauben 15.1 (nur eine ist in Fig. 1 sichtbar), in dem von der Sitzbank P fernen Endbereich des Rahmens 13 an der Rückseite dieses Rahmens befestigt. Die Stütze 15 selbst stützt sich gegen das obere Ende der Rückenlehne Sc ab. Zur korrekten Anstellung der Stütze 15 an den Rahmen 13 und zur Anpassung an die Rückenlehne Sc sind in den Seitenstegen des Flachrahmens 13 zwei Längsreihen durchgehender Bohrungen 15.2 für die Befestigungsmittel 15.1 vorgesehen.

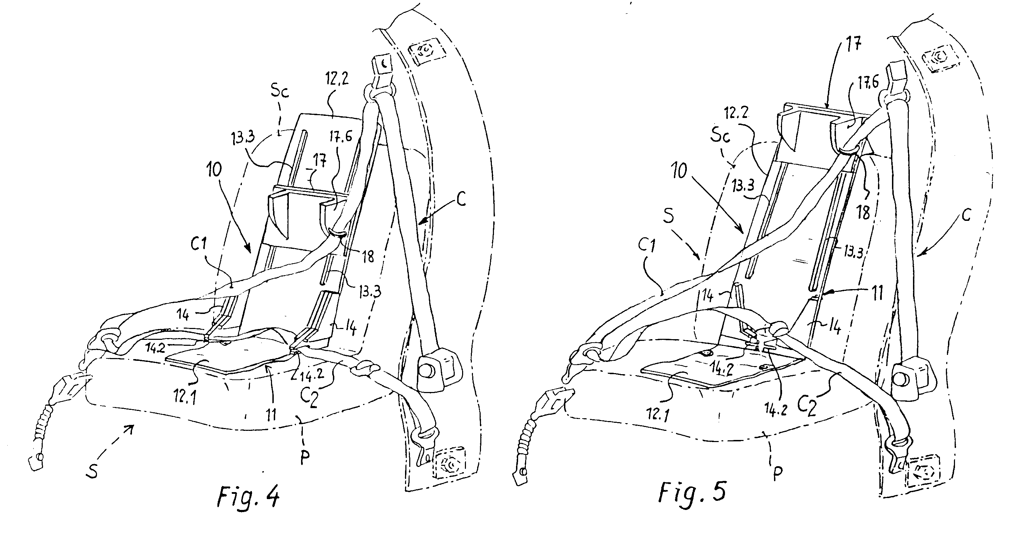

Mit 16.1 sind zwei Riemen zum Festsetzen des Sitzbezugs 11 an die Rückenlehne Sc bezeichnet. Diese Riemen 16.1 sind an dem der Bank P benachbarten Quersteg 13.2 des Rahmens 13 befestigt. An der Stütze 15 befestigte Schnallen 16.2 gestatten, die Riemen 16.1 rückseitig an der Lehne Sc festzubinden.
Mit 17 ist eine Kopfstütze, bestehend aus einer starren Tragplatte 17.1 z.B. aus Kunststoff bezeichnet. Die Platte 17.1 trägt auf ihrer Rückseite zwei geradlinige Führungsnuten 17.2, die auf den Rippen 13.3 des Rahmens 13 längs derselben verschiebbar sind. Eine Druckschraube 17.3 in einer durchgehenden Gewindebohrung 17.4 eines Schenkels einer der erwähnten Führungsnuten 17.2 klemmt die Kopfstütze 17 gegen die zugeordnete Rippe 13.3 und verleiht der Kopfstütze den nötigen Halt. Mittels dieser Anordnung kann die Kopfstütze gegenüber dem Sitz S in der Höhe zwischen einer maximalen Verstellung nach oben (Fig. 5), wobei sie den Kopf eines normal gewachsenen sitzenden Fahrgastes abstützt, und einer maximalen Verstellung nach unten (Fig. 4) bis nahe den Seitenflügeln 14, wobei sie z.B. den Kopf eines sitzenden einjährigen Kindes abstützt, verschoben werden.

Auf der Vorderseite weist die Tragplatte 17.1 ein Polsterkissen 17.5 auf mit starren Seitenflügeln 17.6, die einstückig mit der Platte 17.1 rechtwinklig zu dieser vorstehen.

Wenigstens ein Seitenflügel 17.6 der Kopfstütze 17 trägt nahe dem oberen Ende des Schrägtrums C1 des Sicherheitsgurtes C einen feststehenden Haken 18, der rechtwinklig zur Längserstreckung des Rahmens 13 vorsteht und nach vorne offen ist. Der Haken 18 dient dazu, den Schrägtrum Ci des Sicherheitsgurtes C in jeder gewünschten Verschiebungsstellung der Kopfstütze 17 gegenüber dem Rahmen 13 in leicht lösbarer Weise festzuhalten.

### Betriebsweise:

Mittels der Riemen 16.1 und der Schnallen 16.2 wird der Sitzbezug 11 an der Rückenlehne Sc, wie in Fig. 4 und 5 schematisch dargestellt, festgesetzt. Dann wird der Schrägtrum C1 des Sicherheitsgurtes C in den Haken 18 eingeführt. Wie ersichtlich, kann die Kopfstütze 17 verstellt werden, ohne dass der Schrägtrum C1 vom Haken gelöst wird.

### a) Sicherheitsanordnung für einen Fahrgast von niederer Statur (Fig. 4):

Die Seitenflügel 14 werden in Betriebsstellung bzw. um wenigstens 90° von der geschlossenen Ausgangsstellung ausgehend geschwenkt. Man setzt die Seitenflügel 14 in dieser Stellung fest, indem durch Banddruck die Bandstücke "Velcro" 14.3 gegen die entsprechenden Velcro-Stücke 12.4 gepresst werden. In dieser Stellung überdecken die Seitenflügel 14 den Verlauf des Quertrums C2 des Sicherheitsgurtes C, wenn dieser vom sitzenden Fahrgast angelegt wird.

Der Fahrgast (das Kind) nimmt auf dem Sitz S mit dem Sitzbezug 11 Platz. Man verschiebt die Kopfstütze 17 in die zum korrekten Abstützen des Kopfes des Fahrgastes geeignete Stellung und legt dem Fahrgast den Sicherheitsgurt C an. Auf diese Weise ist der Schrägtrum C1 des Sicherheitsgurtes C nach unten abgelenkt gegenüber seinem Verlauf a bei frei liegendem Gurt, und zwar infolge des Hakens 18 und des zugeordneten Seitenflügel 17.6 der Kopfstütze 17. Der Schrägtrum C1 wird dabei gegen die Schulter des sitzenden Fahrgastes gerichtet, weil sein Verlauf entsprechend der Rumpfhöhe des Fahrgastes nach unten verschoben wird.

Dann wird der Quertrum C2 des Sicherheitsgurtes C in die Einschnitte 14.2 der Seitenflügel 14 eingeführt, so dass sich auch der Quertrum C2 gegenüber dem Verlauf des frei liegenden Sicherheitsgurtes nach unten verstellt in Anpassung an die Lage der Hüften des in S sitzenden Fahrgastes.

Im Fall eines Zusammenstossen des Fahrzeugs gestatten der Haken 18 und die Einschnitte den raschen Auszug und die Freigabe des Sicherheitsgurtes C.

### b) Sicherheitsanordnung für einen Fahrgast von normaler Statur (Fig. 5):

Die Seitenflügel 14 verbleiben in der geschwenkten Ausgangsstellung und bilden eine bequeme Abstützung für die Hüften des auf dem Sitz S mit dem Bezug 11 befindlichen Fahrgast.

Der sitzende Fahrgast regelt die Kopfstütze 17 auf die gewünschte Höhe, wobei der Schrägtrum C1 des Sicherheitsgurtes C immer vom Haken 18 festgehalten wird. Bei angelegtem Sicherheitsgurt C verlaufen die beiden Trume C1, C2 in korrekter Anlage an dem Körper des sitzenden Fahrgastes.

Wie bereits beschrieben, umfasst die erfindungsgemässe Vorrichtung eine Struktur (11,17) zur seitlichen Abstützung und korrekten Sitzhaltung eines Fahrgastes von niederer Statur, welche Struktur ständig an der Rückenlehne Sc eines Fahrzeugsitzes S verankert bleibt und sich wahlweise in Betriebsstellung befinden kann, in der sie Mittel (18/17.6, 14/14.2) zum Ablenken des Schrägtrums C1 und des Quertrums C2 des Sicherheitsgurtes nach unten aufweist zur Anpassung an die Rumpfhöhe und Hüftenlage des sitzenden Fahrgastes von niederer Statur, oder aber in Ausgangsstellung, in der sie einen sitzenden Fahrgast von höherer Statur am korrekten Sitzen nicht behindert.

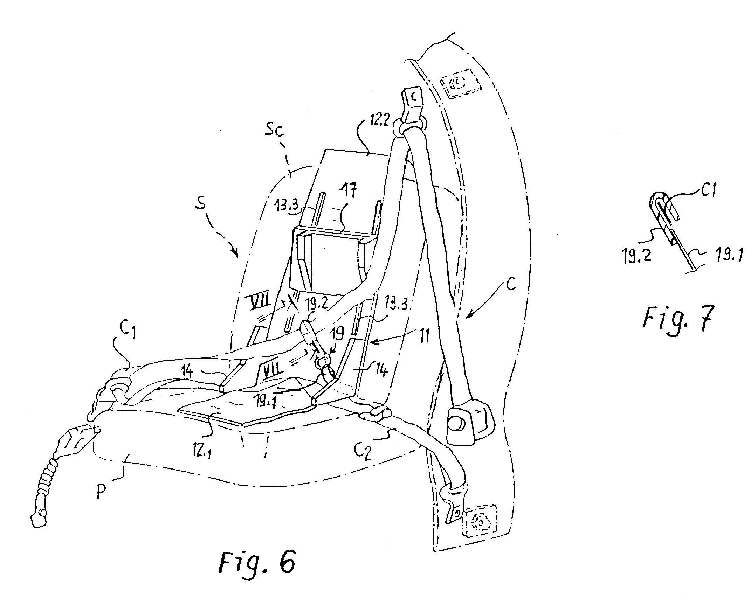

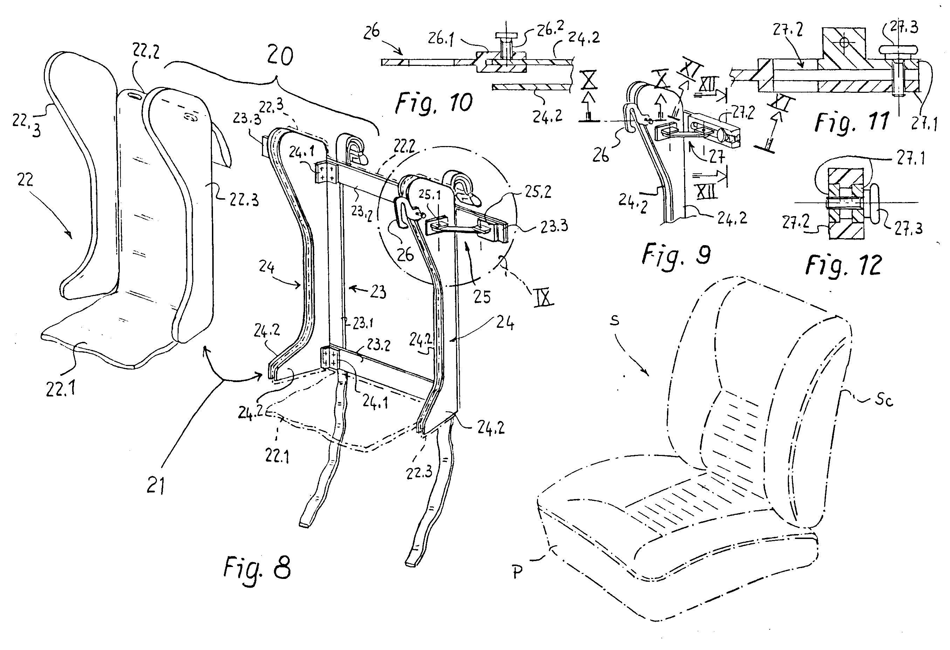

### Abänderung der ersten Ausführungsform: Fig. 6 und 7:

Für entsprechende Teile sind die gleichen Bezugszeichen, wie in den Figuren 1 bis 5 verwendet.

Die Seitenflügel 14 haben hier keine Einschnitte für den Quertrum C2 des Sicherheitsgurtes C. Der Quertrum C2 wird zwischen jedem in Betriebsstellung geschwenkten und festgesetzten Seitenflügel 14 und der Sitzbank P hindurchgeführt, wodurch dasselbe Ergebnis, wie bei der beschriebenen ersten Ausführungsform erzielt wird.

Die Kopfstütze 17 hat keine Haken zum Festhalten des Schrägtrums C1 des Sicherheitsgurtes C. An deren statt sind Halt- und Zugmittel 19 für diesen Schrägtrum C1 vorgesehen. Diese Mittel 19 umfassen ein biegsames und in seiner Erstreckung einstellbares Organ 19.1, z.B. einen Riemen, dessen Nachgiebigkeit grösser ist als die des Schrägtrums C1 des Sicherheitsgurtes C. Der Riemen 19.1 ist am Flachrahmen 13 nahe der Sitzbank P und an der Seitenwand des Fahrzeugs befestigt, an der in zwei Punkten der Sicherheitsgurt C verankert ist. An seinem freien Ende besitzt der Riemen 19.1 Haken 19.2 zum Einhängen des Schrägtrums C1 des Sicherheitsgurtes C, wenn dieser von einem Fahrgast von niederer Statur angelegt wird. Daher wirken diese Halt- und Zugmittel 19, wie in Fig. 6 gezeigt, wenn sie an den Schrägtrum C1 des angelegten Sicherheitsgurtes C angebracht sind, auf den Gurt durch Zug im wesentlichen rechtwinklig gegenüber dem Verlauf des Schrägtrums C1, wenn der Sicherheitsgurt C frei liegt. Dadurch wird der Schrägtrum C1 beim Anlegen des Sicherheitsgurtes C in gewünschtem Mass nach unten abgelenkt, indem die Erstreckung des Riemens 19.1 entsprechend eingestellt wird, wobei auf diese Weise dieselben Wirkungen, wie bei der ersten Ausführungsform, erzielt werden.

### Zweite Ausführungsform: Fig. 8 bis 14:

Die Vorrichtung gemäss der erfindung zum Festhalten eines Fahrgastes von niederer Statur (z.B. eines 1- bis 12-jährigen Kindes) in Zusammenwirkung mit dem Sicherheitsgurt C am Sitz S ist hier allgemein mit 20 bezeichnet.

Die Vorrichtung 20 umfasst einen abnehmbaren Sitzbezug 21.

Der Sitzbezug 21 besteht aus einem gepolsterten Futter 22 z.B. aus Gewebe, das seinerseits durch einen flexiblen Überzug, als Decktuch 22.1 für die Sitzbank P, als Decktuch 22.2 für die Ruckenlehne Sc, sowie als Deckhauben 22.3 für die Seitenflügel gebildet ist, wobei sich diese Deckhauben auf die gesamte Höhe der Rückenlehne Sc erstrecken und mittels durch das Futter 22 gebildete Scharniere an den Längsrändern des Decktuches 22.2 für die Rückenlehne Sc angelenkt sind.

Das Decktuch 22.2 für die Rückenlehne Sc ist durch einen rechteckigen Flachrahmen 23 z.B. aus etwas elastisch nachgiebigem Kunststoff versteift, um eine anatomische Abstützung gegen die Rückenlehne Sc zu ermöglichen. Der Falchrahmen 23 mfasst zwei Seitenstege 23.1 und zwei Querstege 23.2. An jedem Seitensteg 23.1 ist ein starrer Seitenflügel 24 von gleicher Höhe der Rückenlehne Sc mittels zylindrischer Scharniere 24.1, deren Schwenkachse parallel zum Seitensteg verläuft, angelenkt.

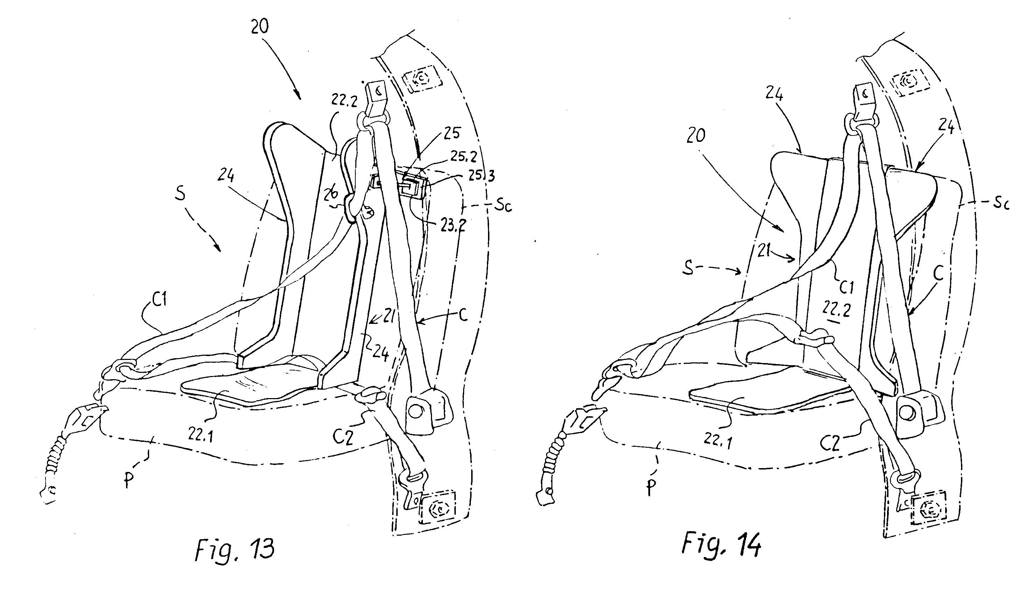

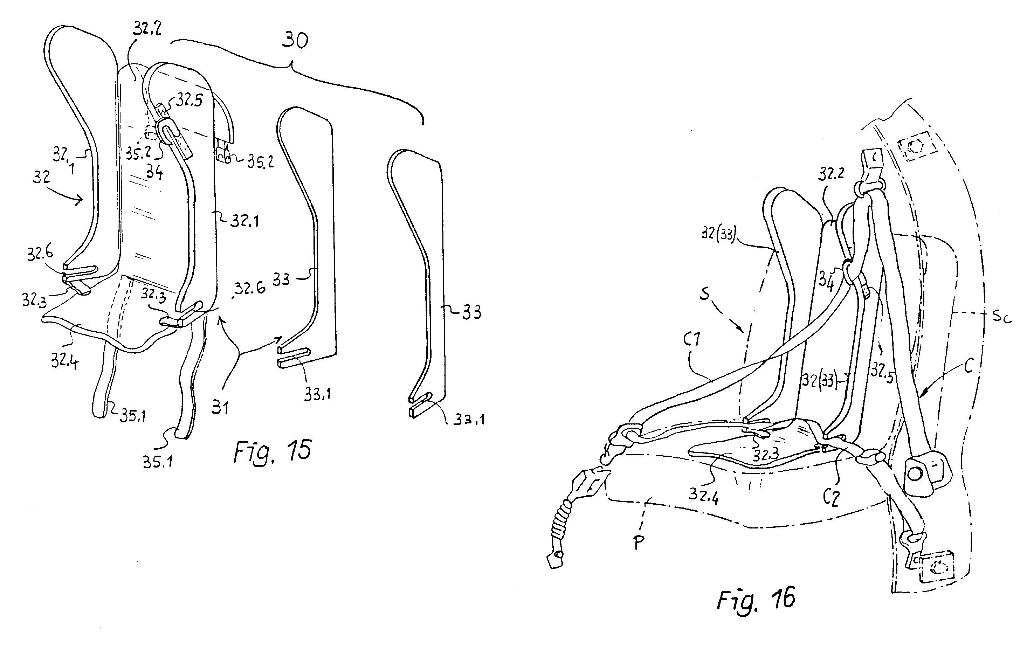

Jeder Seitenflügel 24 ist um die zugeordnete Scharnierachse zwischen einer gegen die Rückenlehne Sc im wesentlichen in gleicher Ebene des Flachrahmens 23 geschwenkten Ausgangsstellung (Fig. 14) und einer um etwa 90° gegenüber der Ausgangsstellung rechtwinklig zum Flachrahmen geschwenkten Betriebsstellung (Fig. 13) verstellbar.

Die Seitenflügel 24 sind jeweils durch zwei Blätter 24.2 z.B. aus Kunststoff gebildet, wobei die beiden Blätter mit einem Zwischenraum gegeneinander angeordnet sind, um in diesem Zwischenraum einen Teil der zugeordneten Deckhaube 22.3 für des Blatt 24.2 eines jeden Seitenflügels 24.2 aufzunehmen.

Der nahe der Sitzbank P angeordnete Quersteg 23.2 reicht seitlich über die Seitenstege 23.1 hinaus und trägt an seinen freien Enden je ein Bandstück "Velcro" 23.3. Auf gleicher Höhe dieses Querstegs 23.2 trägt jeder Seitenflügel 24 einen Stützarm 25 (nur einer ist in Fig. 8 sichtbar), der mittels eines zylindrischen Scharniers 25.1 mit zur Achse der Scharniere 24.1 paralleler Achse angelenkt ist. Der Stützarm 25 trägt an seinem freien Ende einen um eine zur Achse der Scharniere 24.1 parallelen Achse schwenkbaren Gleitschuh 25.2. An diesem Gleitschuh 25.2 ist ein Bandstück "Velcro", das mit einem entsprechenden Bandstück am zugeordneten Ende des von der Sitzbank P fernen Querstegs 23.2 zusammenwirkt. Jeder Stützarm 25 wirkt in seiner gegenüber diesem Quersteg 23.2 festgesetzten Stellung als Strebe, um eine stabile Betriebsstellung des im wesentlichen um 90° gegenüber dem Rahmen 23 geschwenkten Seitenflügels 25 sicherzustellen.

Ein Haken 26 (Fig. 13 u. 10) ist an dem nicht durch die Deckhaube des Seitenflügels 24 überzogenen Blatt 24.2 nahe dem oberen Ende des Schrägstegs C1 des Sicherheitsgurtes C lösbar befestigt. Der Haken 26 liegt in einer im wesentlichen zur Ebene des Blattes 24.2 parallelen Ebene und ist gegen die Bank P hin offen. Die Befestigung des Hakens 26 erfolgt mittels eines U-förmigen Bügels 26.1, der am Blatt 24.2 angebracht ist und mittels einer Druckschraube in einem durchgehenden Gewindeloch des Bügels gegen dieses Blatt 24.2 gedrückt wird. Die Verbindung zwischen dem Haken und dem Blatt 24.2 ist aus Sicherheitsgründen durch Abreissen gegen die Vorderseite des Fahrzeugs hin lösbar.

Die Fig. 9 bis 12 zeigen eine Variante des Stützarmes jedes Seitenflügels 24, wobei hier der Stützarm mit 27 bezeichnet ist. Das der Anlenkung an den Flügel 24 entgegengesetzte Ende des Armes 27 trägt einen Gleitschuh 27.1, der um eine zur Achse der Scharniere 24.1 parallele Achse schwenkbar ist. Der Gleitschuh ist auf einer feststehenden und zu dem Ende des von der Sitzbank P fernen Quersteg 23.2 längs gerichteten Führung verschiebbar. Ausserdem kann der Gleitschuh 27.1 mittels einer Druckschraube 27.3 an der Führung 27.2 festgesetzt werden (Fig. 11, 12).

Im Übrigen wird auf die Beschreibung der ersten Ausführungsform verwiesen.

### Betriebsweise:

Wie aus Fig. 14 ersichtlich ist, erfüllt die Vorrichtung 20 bei in Ausgangsstellung geschwenkten Flügeln 24 nur die Funktion eines Sitzbezugs. Die Stützarme 25 (27) der Flügel 24 sind nicht an dem von der Sitzbank P fernen Quersteg 23.2 des Rahmens 27 festgesetzt und verlaufen im wesentlichen parallel zum Quersteg 23.2.

Zum Festhalten eines Fahrgastes von niederer Statur werden die Seitenflügel 24 in Betriebsstellung geschwenkt (Fig. 13) und mittels der lösbar am Quersteg 23.2 befestigten Stützarme 25 (27) in dieser Stellung festgesetzt.

In der Betriebsstellung überdecken die Seitenflügel 24 den Verlauf des Quertrums C2 des Sicherheitsgurtes C, der zwischen diesen und der Sitzbank P hindurchgeht. Ausserdem befinden sich die Seitenflügel 24 nahe den Hüften eines sitzenden Fahrgastes von niederer Statur (z.B. eines 1- bis 12-jährigen Kindes), für den sie einen sicheren Seitenhalt, eine bequeme Kopfstütze und eine korrekte Sitzhaltung verschaffen.

Der Haken 26 wird in zweckmässiger Höhe am Seitenflügel 24, um den Schrägtrum C1 des Sicherheitsgurtes C nach unten abzulenken.

Im übrigen wird wiederum auf die Überlegungen bezüglich des ersten Ausführungsbeispiels hingewiesen. Bei dieser Ausführungsform jedoch wird sich der Haken 26 im Falle eines Zusammenstosses des Fahrzeugs infolge der vom Körper des Fahrgastes auf den Schrägtrum C1 des Sicherheitsgurtes C ausgeübten Belastung mit Leichtigkeit von dem Seitenflügel 24 lösen.

### Dritte Ausführungsform: Fig. 15 u. 16:

Die erfindungsgemässe Vorrichtung ist hier allgemein mit 30 bezeichnet (Fig. 15). Sie umfasst einen Sitzbezug 31, der ähnlich dem vorausgehend beschriebenen Bezug 21 ausgebildet ist.

Zum Unterschied davon besitzt der Sitzbezug 31 keinen Versteifungsrahmen, sondern nur ein Futter 32. Vorhanden sind hingegen starre Seitenflügel 33, die sich in gleicher Höhe, wie die Rückenlehne Sc erstrecken und z.B. aus mit Deckhauben 32.1 überzogenen Kunststoffblättern bestehen. Das Futter 31 ermöglicht eine freie Schwenkbewegung der Seitenflügel 33 um die Achsen biegsamer Scharniere, die durch das Futter 32 selbst gebildet sind und parallel zu den Längsrändern des Decktuchs 32.2 für die Rückenlehne verlaufen.

Zum Festsetzen der Seitenflügel 33 in Betriebsstellung, in der sie von der Rückenlehne Sc nach vorne vorstehen, ist an jeder Deckhaube 32.1 ein Bandstück "Velcro" 32.3 zur Verbindung mit dem Decktuch 32.4 der Bank P angebracht. In der Betriebsstellung überdecken die Seitenflügel 33 den Verlauf des Quertrums C2 des angelegten Sicherheitsgurtes C und befinden sich nahe den Hüften eines Fahrgastes von niederer Statur (z.B. eines 1- bis 12-jährigen Kindes), für den sie einen sicheren Seitenhalt, eine bequeme Kopfstütze und eine korrekte Sitzhaltung schaffen.

Wenigstens an der Deckhaube 32.1 nahe dem oberen Ende des Schrägtrums C1 des Sicherheitsgurtes C ist ein Bandstück "Velcro" 32.5 angebracht. Ein Haken 34 ist mittels eines in der Zeichnung nicht sichtbaren Gegenband "Velcro" an dem Bandstück 32.5 befestigt. Die Länge des Bandstückes 32.5 gestattet, den Haken z.B. in Abhängigkeit von der Statur des Kindes auf einer unterschiedlichen Höhe vom Sitz S zu befestigen. Der so befestigte Haken lässt sich leicht abreissen im Fall eines Fahrzeugunfalls. Im Übrigen entspricht der Haken 34 in seiner Ausbildung, Anordnung und Funktion dem Haken 26 der vorausgehend beschriebenen Vorrichtung 20.

Wie man sehen kann, weisen die starren Flügel 33 und dementsprechend die Deckhauben 32.1 Einschnitte 33.1 bzw. 32.6 auf, die bezüglich Ausbildung, Anordnung und Funktion den Einschnitten 14.2 der Seitenflügel 14 der vorausgehend beschriebenen Vorrichtung 10 entsprechen.

Riemen 35.1 und Schnallen 35.2 zum Festsetzen an die Rückenlehne Sc des Sitzes S sind hier am Decktuch 32.2 für die Rückenlehne Sc angebracht.

Die Betriebsweise der Vorrichtung 30 geht aus der vorausgehenden Beschreibung auch mit Bezug auf die bereits beschriebenen Ausführungsformen hervor.

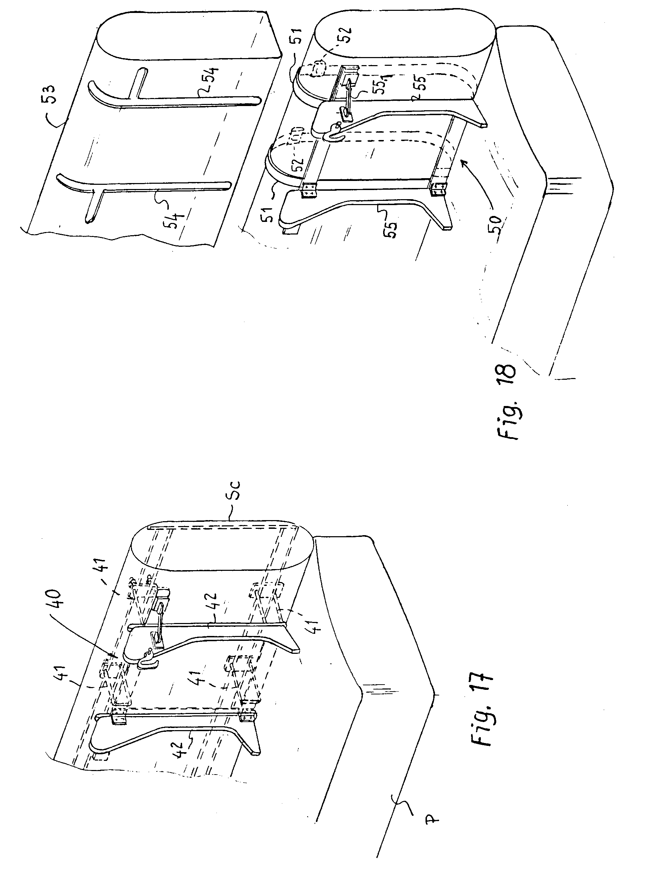

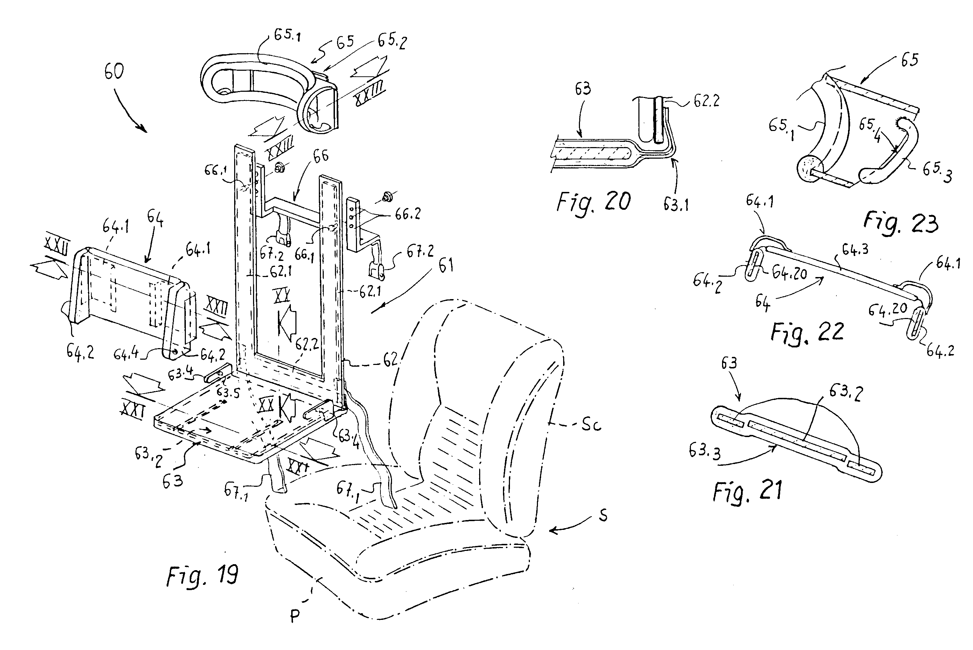

### Vierte und fünfte Ausführungsform: Fig. 17 bzw. 18:

Die Vorrichtung gemäss der vierten Ausführungsform der Erfindung ist in Fig. 17 allgemein mit 40 bezeichnet.

In ihrem Aufbau entspricht sie der bereits beschriebenen Vorrichtung 20 mit Ausnahme der Mittel zum Festsetzen an der Rückenlehne Sc des Sitzes S sowie des Futters.

Die Vorrichtung 40 ist mittels Bügel 41 am Traggerippe der Rückenlehne Sc befestigt.

Anstatt des Futters sind hier (nicht dargestellte) Deckhauben allein für die Seitenflügel 42 vorgesehen.

Die Vorrichtung gemäss der fünften Ausführungsform der Erfindung ist in Fig. 18 allgemein mit 50 bezeichnet.

Auch diese Vorrichtung entspricht dem vorbeschriebenen Ausführungsbeispiel 20. Die Vorrichtung 50 ist jedoch mittels Riemen 51 und Schnallen 52 an die Polsterung und/oder Verkleidung der Rückenlehne Sc befestigt. Das Futter 53 der Rückenlehne Sc besitzt Einschnitte 54 zum Hindurchführen der Seitenflügel 55 und der zugeordneten Stützarme 55.1. Auch bei der Vorrichtung 50 sind Deckhauben (nicht dargestellt) zur Verkleidung der Seitenflügel 55 hinreichend.

Diese vierte und fünfte Ausführungsformen sind zum Integrieren der Vorrichtung 40 bzw. 50 in den Sitz S schon bei der Herstellung des Sitzes S von Vorteil.

Als Variante dazu kann eine Verkleidung oder ein Aussenfutter für die Rückenlehne mit integrierter Vorrichtung 40 bzw. 50 vorgesehen sein.

### Sechste Ausführungsform: Fig. 19 bis 26:

Die erfindungsgemässe Vorrichtung ist hier (Fig. 19, 24, 25) allgemein mit 60 bezeichnet.

Die Vorrichtung 60 umfasst einen Sitzbezug 61 mit einem U-förmigen Rahmen 62, z.B. aus etwas elastisch nachgiebigem Kunststoff, zur anatomischen Abstützung gegen die Rückenlehne Sc. Der U-förmige Rahmen 62 weist zwei Seitenstege 62.1 von wenigstens gleicher Höhe wie die der Rückenlehne Sc, und einen unteren Quer - steg 62.2 nahe der Sitzbank P auf. Der Rahmen 62 ist vorderseitig gepolstert.

Ein im wesentlichen flaches Polsterkissen 63, z.B. aus Kunstharz, ist mit dem Quersteg 62.2 des Rahmens 62 mittels eines mit dem Kissen einstückigen Scharniers aus Kunstharzband 63.1 (Fig. 20) durch Thermoschweissung schwenkbar verbunden. Das Kissen 63 umschliesst ein Verstärkungsblatt 63.3 aus Kunststoff, das an der vom Rahmen 62 abgekehrten Seite konkav ausgebildet ist (Fig. 21). Das Versteifungsblatt 63.2 weist ausserdem zwei einstückig damit verbundene Haken 63.4 auf, die sich gegenüber dem Kissen und dem Rahmen 62 nach auswärts und in zur Schwenkachse des Kissens 63 rechtwinkligen Ebenen sowie stirnseitig offen erstrecken.

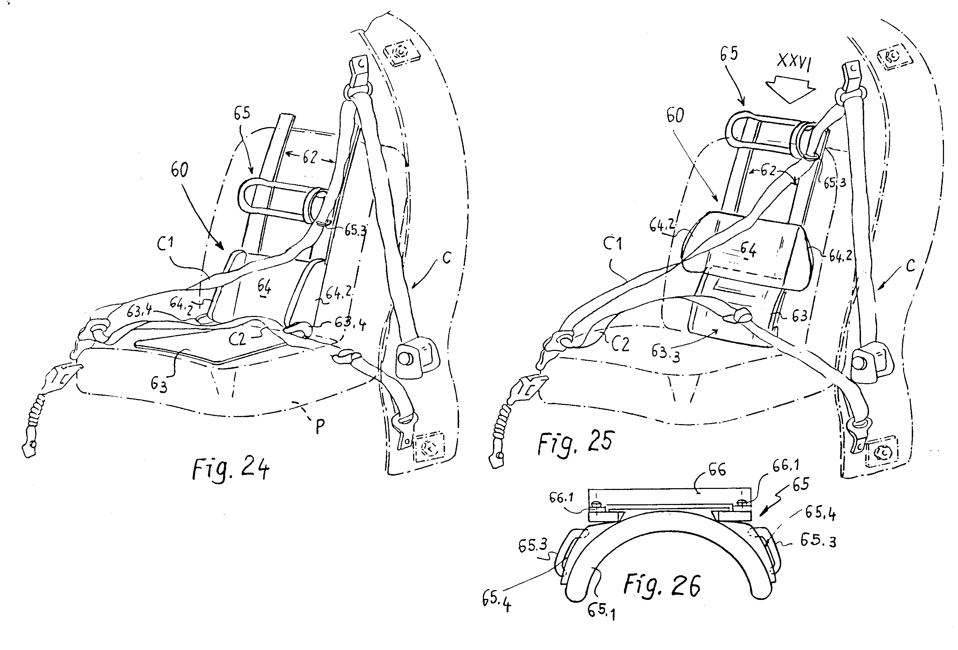

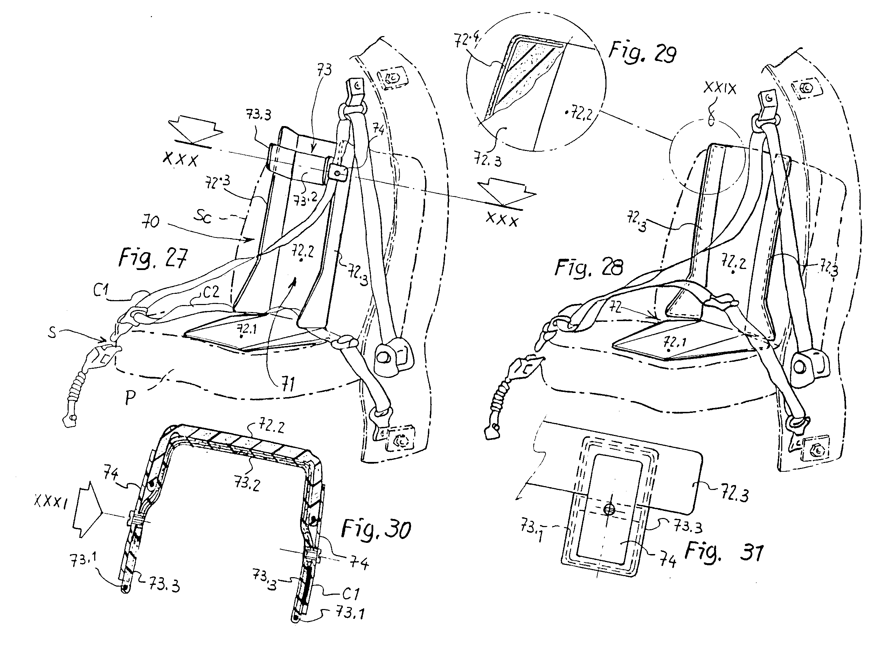

Das Kissen 63 ist mittels eines Scharniers 63.1 zwischen einer Betriebsstellung (Fig. 24), in der es auf der Sitzbank P aufliegt und dieselbe überdeckt, und einer Ausgangstellung (Fig. 25), in der es gegen den Rahmen 62 geschwenkt ist, seine konkave Fläche 63.3 dem sitzenden Fahrgast zuwendet und zur Lendenabstützung für den sitzenden Fahrgast dient, verstellbar.

Den Seitenstegen 62.1 des Rahmens 62 entleng ist ein Polsterkissen 64 z.B. aus Kunstharz verstellbar, das die Rückenlehne Sc des Sitzes S teilweise überdeckt. Das Kissen 64 besitzt auf seiner Rückseite zwei Bügel 64.1 (Fig. 22), die formgerecht den Seitenstegen 62.1 angepasst sind und zur Führung des Kissens diesen entlang verschiebbar sind.

Das Polsterkissen 64 besitzt zwei schwenkbare Seitenflügel 64.2, die je mittels eines starren Blattes 64.20 versteift sind und von einem zwischengelagerten Körper 64.3 mit gleicher Breite, wie die des Rahmens 62 vorstehen. Die Seitenflügel 64.2 sind mit dem Körper 64.3 durch biegsame Scharniere verbunden, deren Schwenkachsen im wesentlichen parallel zur Längsrichtung des Rahmens 62 verlaufen. Demnach sind diese Seitenflügel 64.2 in eine Betriebsstellung (Fig. 24) schwenkbar, in der sie in zur Schwenkachse des Kissens 63 rechtwinkligen Ebenen verlaufen und gegenüber dem Rahmen 62 nach vorne vorstehen, und in eine Ausgangsstellung (Fig. 25), in der sie seitlich vom Rahmen 62 an der Rückenlehne Sc anliegen. Zur lösbaren Befestigung der Seitenflügel 64.2 in der Betriebsstellung sind auf der Innenseite der Haken 63.4 und auf der Aussenseite der Seitenflügel Druckknöpfe 63.5/64.4 vorgesehen.

Oberhalb des Kissens 64 ist eine Kopfstütze 65 mit einem vorderseitigen, anatomisch ausgebildeten und z.B. aus Kunststoff bestehenden Polsterkissen 65.1 den Seitenstegen 62.1 des Rahmens 62 entlang verschiebbar angeordnet. Dieses Kissen 65.1 ist von einem Schlitten 65.2 gehaltert, der mit zwei in den Zeichnungen kaum sichtbaren Führungsnuten versehen ist. Mittels dieser Anordnung ist die Kopfstütze 65 den Seitenstegen 62.1 entlang höhenmässig in Bezug auf den Sitz S je nach der Statur des sitzenden Fahrgastes mit Reibung verschiebbar.

Die Kopfstütze trägt zwei seitliche biegsame Haken 65.3 (Fig. 23, 26) z.B. aus Kunststoff, die mit der Kopfstütze 65 Durchlässe 65.4 für den Schrägtrum C1 des Sicherheitsgurtes C bilden. Das vordere Ende der Haken 65.3 ist frei und gestattet so das Ein- und Aushängen des Schrägtrums C1 des Sicherheitsgürtels C.

Ein als Konsole ausgebildeter Stützkörper 66 ist über Befestigungsmittel, wie zwei Schrauben 66.1, im oberen Endbereich der Seitenstege des Rahmens 62 mit deren Rückseite lösbar verbunden. Die Konsole 66 ist also seinerseits gegen den oberen Bereich der Rückenlehne Sc abgestützt. Zur korrekten Anstellung der Konsole 66 an den Rahmen 62 und zur Anpassung an die Rückenlehne Sc sind in der Konsole 66 zwei Reihen von durchgehenden Bohrungen 66.2 vorgesehen, deren Achsen in zur Längsrichtung der Seitenstege 62.1 parallelen Ebenen liegen und in denen die Befestigungsmittel 66.1 Aufnahme finden.

Mit 67.1 sind zwei Riemen bezeichnet, die zum Festsetzen des Überzugs 60 an der Rückenlehne Sc dienen. Die Riemen 67.1 sind an dem der Sitzbank P benachbarten Seitensteg 62.2 des Rahmens 62 befestigt. An der Konsole 66 befestigte Schnallen 67.2 gestatten, die Riemen 67.1 an die Rückenlehne Sc anzuschliessen.

### Betriebsweise:

Man setzt den Bezug 61 mittels der Riemen 67.1 und der Schnallen 67.2 an der Lehne Sc fest, wie in den Fig. 24, 25 schematisch dargestellt ist. Dann wird der Schrägtrum C1 des Sicherheitsgurtes C in den Haken 65.3 eingehängt. Die Kopfstütze kann dabei ohne den Schrägtrum C1 aus dem Haken 65.3 auszuhängen verstellt werden.

### a) Sicherheitsanordnung für einen Fahrgast von niederer Statur (Fig. 24):

Man kippt das Kissen 63 auf die Sitzbank P. Die am Kissen 63 befestigten Haken 63.4 stellen sich automatisch in den Verlauf des Quertrums C2 des angelegten Sicherheitsgurtes C. Dann wird das Kissen 64 hochkantig auf das Kissen 63 aufgesetzt, wobei die Seitenflügel 64.2 in Betriebsstellung geschwenkt werden. Mittels der Druckknöpfe 63.5/64.4 werden dann die Flügel festgesetzt. Der Fahrgast (z.B. ein 1- bis 12-jähriges Kind) nimmt dann in der durch die beiden Kissen 63, 64 und die Seitenflügel 64.2 begrenzte Sitzmulde Platz.

Dann wird die Kopfstütze 65 entsprechend der Kopfhöhe des Fahrgastes verstellt. Nun kann der Sicherheitsgurt C angelegt werden.

Der in den Haken 65.3 eingehängte Schrägtrum C1 des Sicherheitsgurtes C wird gegenüber dem Verlauf des frei liegenden Sicherheitsgurtes nach unten abgelenkt durch den erwähnten Haken und die Kopfstütze 65. Gleichzeitig wird der Schrägtrum C1 in Richtung auf die Schulter des sitzenden Fahrgastes entsprechend der Rumpfhöhe desselben verstellt. Anschliessend wird der Quertrum C2 des Sicherheitsgurtes C in die Haken 63.4 des Kissens 63 eingehängt, indem der Quertrum C2 unter den Seitenflügeln 64.2 hindurchgeführt wird. So wird auch dieser Trum C2 gegenüber seinem Verlauf bei frei liegendem Sicherheitsgurt nach unten verschoben und dies entsprechend der Lage der Hüften eines sitzenden Fahrgastes von niederer Statur.

Im Fall eines Zusammenstosses des Fahrzeugs gestatten der Haken 65.3 und die Haken 63.4 eine rasche Freigabe des Sicherheitsgurtes.

### b) Sicherheitsanordnung für einen Fahrgast von normaler Statur (Fig. 25):

Das Kissen 64 wird nach oben verstellt, indem die Seitenflügel gegen die Rückenlehne Sc geschwenkt werden, nachdem die Verbindung mittels der Druckknöpfe 63.5/64.4 zwischen des Seitenflügeln 64.2 und den Haken 63.4 gelöst wurde. Dann wird das Kissen 63 gegen den Rahmen 62 unterhalb des Kissens 64 gekippt. Dieser wird nach unten in teilweiser Überdeckung des Kissens 63 verschoben, um dasselbe in seiner Stellung zu sichern. (Infolge der Schwenkung des Kissens 63 sind die Haken 63.4 in fluchtender Stellung zum Rahmen 62.)

Der Fahrgast kann nun auf dem Sitz S Platz nehmen, wobei der Bezug 61 eine bequeme Lendenabstützung (Kissen 63) und Rückenabstützung (Kissen 64) bietet. Der sitzende Fahrgast regelt nun die Kopfstütze 65 in der Höhe, wobei der Schrägtrum C1 immer im Haken 65.3 eingehängt ist. Nach Anlegen des Sicherheitsgurtes C befinden sich die Trume C1, C2 in korrekter Stellung zum Halten des Fahrgastes. Wie aus dem Vorausgehenden hervorgeht, bietet die erfindungsgemässe Vorrichtung einem Fahrgast von niederer Statur eine korrekte Seitenabstützung des Rumpfes und des Kopfes, eine korrekte Sitzhaltung durch den Sicherheitsgurt trotz der niederen Statur des Fahrgastes.

### Siebte Ausführungsform: Fig. 27 - 31:

Hier ist die erfindungsgemässe Vorrichtung in ihrem Ganzen mit 70 bezeichnet (Fig. 27).

Die Vorrichtung 70 umfasst einen Sitzbezug 71, der abnehmbar ist.

Der Sitzbezug 71 besteht aus einem gepolsterten Futter 72, z.B. aus Gewebe, das ein Decktuch 72.1 für die Bank P des Sitzes S und ein Decktuch 72.2 für die Rückenlehne Sc bildet, und aus zwei Seitenflügeln 72.3, die sich über die Höhe der Lehne Sc erstrecken und mittels am Futter 72 ausgebildeter biegsamer Scharniere mit den Längsrändern des Decktuches 72.2 für die Rückenlehne Sc verbunden sind.

Die Seitenflügel 72.3 sind im Bereich ihres Aussenrandes versteift, z.B. durch etwa C-förmige Versteifungseisen 72.4 (Fig. 29). Übliche Befestigungsmittel z.B. Riemen und Schnallen (nicht dargestellt) verbinden den Sitzbezug 71 mit dem Sitz S.

Jeder Seitenflügel 72.3 ist um eine Scharnierachse wahlweise zwischen einer Ausgangsstellung, in der die Flügel gegen die Rückenlehne Sc geöffnet d.h. geschwenkt sind (Fig. 28), und einer Betriebsstellung, in der die Flügel um etwa 90° gegenüber der Ruhestellung nach vorne d.h. in von der Rückenlehne Sc abgekerter Stellung geschwenkt sind (Fig. 27). In dieser Betriebsstellung ist der untere Rand der Seitenflügel 72.3 vom Decktuch 72.1 der Bank P etwas beabstandet.

Mit 73 ist (in Fig. 27) eine Kopfstütze bezeichnet. Diese ist abnehmbar und kann bei in Betriebsstellung geschwenkten Seitenflügeln 72.3 an den Bezug 71 angebracht werden.

In der Ansicht von oben weist die Kopfstütze 73 eine etwa U-förmige Gestalt auf und findet zwischen dem Decktuch 72.2 der Rückenlehne Sc und den Seitenflügeln 72.3 Platz, wenn letztere in Betriebsstellung geschwenkt sind.

Die Kopfstütze 73 besteht aus einem flachen Polsterkissen, das z.B. durch eine Verdrahtung 73.1 versteift ist (Fig. 30, 31) und zwar im Bereich des Randes und der Kanten. Sie umfasst eine Nackenabstützung 73.2 und zwei feststehende Seitenstützen 73.3 für den Kopf des sitzenden Fahrgastes. Die Seitenstützen 73.3 tragen an ihren Aussenseiten ein elastisch biegsames Blatt 74, z. B. aus Kunststoff, das mittig zur Versteifung 73.1 (z. B. mittels einer Schraube) befestigt ist (Fig. 30, 31). Jedes Blatt 74 bildet in Zusammenwirkung mit der zugeordneten Seitenstütze 73.3 eine elastische Doppelklemme.
Durch diese Anordnung kann die Kopfstütze 73 in Gebrauchsstellung gegenüber den Seitenflügeln 72.3 des Sitzbezugs 71 auf der gewünschten Höhe lösbar festgesetzt werden, indem die Flügel zwischen den Seitenstützen 73.3 und einem Schenkel der elastischen Klemmen 74 verankert werden (Fig. 30), während zwischen dem anderen Schenkel der Klemme 74, der nahe dem oberen Ende des Schrägtrums C1 des Sicherheitsgurtes gelegen ist, und der zugeordneten Seitenstütze 73.3 ein Mittelabschnitt des Schrägtrums C1 lösbar festgesetzt werden kann.

In Abänderung dazu kann eine Aussenverkleidung oder ein Futter für die Rückenlehne Sc zusammen mit der Vorrichtung 70 vorgesehen werden.

### Betriebsweise:

Wie aus der Fig. 28 hervorgeht, erfüllt die Vorrichtung 70 bei in Ausgangstellung geschwenkten Seitenflügeln 72.3 nur die Funktion eines Sitzbezugs. In diesem Fall befindet sich die Kopfstütze 73 ausser Betrieb.

Zum Festhalten eines Fahrgastes von niederer Statur werden die Seitenflügel 72.3 in Betriebsstellung geschwenkt (Fig. 27); dann wird an diese die Kopf - stütze 73 auf passender Höhe angebracht. Durch das Festsetzen der Kopfstütze mittels der elastischen Klemmen werden auch die Seitenflügel in ihrer Betriebsstellung festgehalten.

In dieser Stellung überdecken die Seitenflügel 72.3 den Verlauf des Quertrums C2 des Sicherheistgurtes C, der zwischen diesen Flügeln und der Sitzbank P hindurchgeführt und so in Anpassung an die Lage der Hüften eines Fahrgastes von niederer Statur nach unten abgelenkt wird.

Ausserdem sind die Seitenflügel 72.3 auf diese Weise nahe den Hüften des Fahrgastes von niederer Statur (z.B. eines 1- bis 12-jährigen Kindes) angeordnet und bilden in Zusammenwirkung mit der Kopfstütze 73 eine sichere Seiten- und Kopfabstützung sowie eine korrekte Sitzhaltung für den Fahrgast. Der Schrägtrum C1 des Sicherheitsgurtes C wird zwischen dem freien Schenkel des elastischen Blattes 74 und der zugehörigen Seitenstütze 73.3 nahe dem oberen Ende des Trums C1 derart hindurchgeführt, dass dieser Trum C1 nach unten, d.h. nahe der Schulter des sitzenden Fahrgastes, abgelenkt wird.

Im Falle eines Fahrzeugunfalls lösen sich beide Trume des Sicherheistgurtes C leicht von den Festhaltemitteln (Flügel 72.3 und Klemme 73.3/74) der Vorrichtung 70 infolge der auf diese Trume durch den sitzenden Fahrgast ausgeübten Belastung. Im übrigen gelten die gleichen Überlegungen, wie sie bereits für die vorausgehenden Ausführungsformen angestellt wurden.

## Patentansprüche

1. Vorrichtung zum Festhalten eines Fahrgastes von niederer Statur an einem mit Sicherheitsgurt ausgerüsteten Fahrzeugsitz, wobei der angelegte Sicherheitsgurt wenigstens einen schräg gerichteten Schultertrum und einen quer gerichteten Lendentrum bildet und wobei die Vorrichtung eine Struktur aufweist, die zur seitlichen Abstützung und zur korrekten Sitzhaltung eines Fahrgastes von niederer Statur dient, an der Rückenlehne des Sitzes stabil verankert ist und eine Betriebsstellung einnehmen kann, bei der sie Mittel zum Ablenken des Schrägtrums und des Quertrums des angelegten Sicherheitsgurtes nach unten abhängig von der Höhe des Rumpfes und der Lage der Hüften des den Sitz besetzenden Fahrgastes von niederer Statur aufweist, dadurch **gekennzeichnet,** dass die Vorrichtung durch Verschwenken von Seitenflügeln eine Ausgangsstellung einnahmen kann, in der diese Struktur einen erwachsenen Fahrgast von normaler Statur bzw. grösserer Statur am lagerichtigen Benutzen des Sitzes (S) nicht behindert.

2. Vorrichtung nach Anspruch 1, dadurch **gekennzeichnet**, dass die erwähnte Struktur zur seitlichen Abstützung und korrekten Sitzhaltung eines Fahrgastes von niederer Statur wenigstens ein Paar starrer Seitenflügel (14; 24; 33; 42; 55; 64.2; 72.3) aufweist, die je an einer Seite des Fahrgastes angeordnet und wahlweise schwenkbar sind zwischen einer Ausgangsstellung, in der sie als Abstützung gegen die Rückenlehne (Sc) für einen sitzenden Fahrgast von normaler bzw. grösserer Statur dienen, und einer Betriebsstelung, in der sie neben den Seiten Hüften des sitzenden Fahrgastes von niederer Statur und nahe der Sitzbank (P), die den eigentlichen Sitz bildet, angeordnet sind und in der die Seitenflügel den Verlauf des Quertrums (C2) des Sicherheitsgurtes (C) derart überdecken, dass der Quertrum (C2) durch diese Seitenflügel erfasst und gegenüber seinem Verlauf bei frei liegendem Sicherheitsgurt (C) in Abhängigkeit von der Lage der Hüften eines den Sitz (S) besetzenden Fahrgastes von niederer Statur nach unten abgelenkt wird.

3. Vorrichtung nach Anspruch 2, dadurch **gekennzeichnet**, dass sich die starren Seitenflügel (24, 33, 42, 55) im wesentlichen bis zur Höhe des oberen Randes der Rückenlehne (Sc) des Sitzes (S) derart erstrecken, dass sie für einen Fahrgast von niederer Statur jeweils auch eine seitliche Kopfsbstützung bilden.

4. Vorrichtung nach Anspruch 2, dadurch **gekennzeichnet**, dass sich die starren Seitenflügel (72.3) im wesentlichen bis zur Höhe des oberen Randes der Rückenlehne (Sc) des Sitzes (S) erstrecken und gestatten, eine abnehmbare Kopfstütze (73) für einen Fahrgast von niederer Statur anzubringen, der den Sitz besetzt.

5. Vorrichtung nach Anspruch 2 oder 3, dadurch **gekennzeichnet**, dass Mittel (26, 34) vorgesehen sind, um den Schrägtrum (C1) des angelegten Sicherheistgurtes (C) nach unten abzulenken, die nahe dem oberen Ende des Schrägtrums (C1) mit dem Seitenflügel (24, 33, 42, 55) und derart an dem Seitenflügel auf einer Höhe gegenüber dem Sitz (S) befestigt sind, das der durch die erwähnten Ablenkungsmittel trennbar festgehaltene Schrägtrum (C1) des Sicherheitsgurtes (C) in Richtung auf die Schulter des den Sitz besetzenden Fahrgastes von niederer Statur verschoben wird.

6. Vorrichtung nach Anspruch 5, dadurch **gekennzeichnet**, dass die erwähnten Ablenkungsmittel (26, 34) nach Art eines Hakens ausgebildet und am erwähnten Seitenflügel trennbar befestigt sind.

7. Vorrichtung nach Anspruch 1 oder 2, **gekennzeichnet** durch eine Kopfstütze (17, 65, 73), die auf einer abhängig von der Grösse des sitzenden Fahrgastes von niederer Statur veränderlichen Höhe gegenüber dem Sitz (S) angeordnet ist und Mittel (18, 65.3, 73.3/74) um den Schrägtrum (C1) des angelegten Sicherheitsgurts (C) nach unten abzulenken aufweist, die nahe dem oberen Ende des Schrägtrums (C1) festgesetzt sind, wobei der Schrägtrum durch die erwähnten Ablenkungsmittel trennbar festgehalten und in Richtung auf die Schulter des den Sitz (S) besetzenden Fahrgastes von niederer Statura gelenkt wird.

8. Vorrichtung nach Anspruch 7, dadurch **gekennzeichnet**, dass die erwähnten Ablenkungsmittel nach Art eines Hakens (18, 65.3) einer elastischen Klemme (73.3/74) ausgebildet sind, wodurch der Schrägtrum (C1) des angelegten Sicherheitsgurtes (C) festgehalten und in Richtung auf die Vorderseite des Fahrzeugs hin ausgezogen werden kann.

9. Vorrichtung nach Anspruch 1 oder 2, dadurch **gekennzeichnet**, dass die erwähnte Struktur zur seitlichen Abstützung und korrekten Sitzhaltung eines Fahrgastes von niederer Statur einen abnehmbaren Sitzbezug (11, 21, 31, 61, 71) bildet.

10. Vorrichtung nach Anspruch 9, dadurch **gekennzeichnet**, dass der erwähnte Sitzbezug (11, 21) durch an der Rückenlehne (Sc) des Sitzes (S) angesetzte Rahmenelemente (13, 23) verstärkt ist, an denen die Seitenflügel (14, 24) angelenkt sind.

11. Vorrichtung nach Anspruch 9, dadurch **gekennzeichnet**, dass der erwähnte Sitzbezug (31, 71) durch ein Futter, (32, 72) gebildet ist, an dem die starren Seitenflügel (33, 72.3) mittels biegsamer Scharniere angelenkt sind.

12. Vorrichtung nach Anspruch 2 oder 9, dadurch **gekennzeichnet**, dass die Seitensflügel (14) eine lendenseitige Abstützung für einen den Sitz (S) besetzenden Fahrgast bilden, sobald sie sich in eingeschwenkter Ausgangsstellung befinden.

13. Vorrichtung nach Anspruch 10, dadurch **gekennzeichnet**, dass der erwähnte Sitzbezug (11) eine Kopfstütze (17) trägt, die gegenüber den Rahmenelementen (13, 13.3) derart vestellbar ist (Führungen 17.2), dass ihre Höhe gegenüber dem Sitz (S) verändert werden kann, wobei die Kopfstütze (17) Mittel (18) zur Ablenkung des Schrägtrums (C1) des Sicherheitsgurtes (C) im angelegten Zustand nach unten aufweit.

14. Vorrichtung nach Anspruch 9, dadurch **gekennzeichnet**, dass der erwähnte Sitzbezug (71) durch ein Futter (72) gebildet ist, an dem mittels biegsamer Scharniere die starren, sich vorzugsweise über die ganze Höhe der Rückenlehne (Sc) des Sitzes (S) erstreckenden Seitenflügel (72.3) angelenkt sind, während bei in Betriebsstellung geschwenkten Seitenflügeln eine abnehmbare Kopfstütze (73) in gewünschter Höhe anbringbar ist und Mittel (73.3/74) zur Ablenkung des Schrägtrums (C1) des angelegten Sicherheitsgurtes (C) aufweist.

15. Vorrichtung nach Anspruch 14, dadurch **gekennzeichnet**, dass die erwähnte Kopfstütze (73) zwischen den in Betriebsstellung geschwenkten Seitenflügeln (72.3) massgerecht Platz findet und aus einem verstärkten Polsterkissen besteht, der eine Nackenstütze (73.2) und zwei feststehende Seitenstützen (73.3) für den Kopf des sitzenden Fahrgast bildet, wobei die Seitenstützen (73.3) jeweils auf ihrer Aussenfläche ein elastisch biegsames Blatt (74) tragen und dieses in Mittelstellung gegenüber der Verstärkung (73.1) dieser Abstützung derart festgesetzt ist, dass jedes Blatt (74) zusammen mit der zugeordneten Seitenstütze (73.3) eine elastische Doppelklemme bildet, wodurch die Kopfstütze (73) in Gebrauchsstellung gegenüber den Seitenflügeln (72.3) auf der gewünschten Höhe trennbar befestigt werden kann, wobei die Seitenflügel zwis hen den Seitenstützen (73.3) und einem Schenkel des zugeordneten elastischen Blatt (74) eingezwängt wird, während zwischen dem anderen Schenkel dieses Blattes nahe dem oberen Ende des Quertrums (C1) des Sicherheitsgurtes (C) und der zugeordneten Seitenstütze (73.3) ein Mittelteil dieses Quertrums (C1) trennbar festgesetzt wird und im Falle eines Fahrzeugunfalls leicht in Richtung auf die Vorderseite des Fahrzeugs ausziehbar ist.

16. Vorrichtung nach Anspruch 1 oder 2, dadurch **gekennzeichnet**, dass die erwähnte Struktur zur seitlichen Abstützung und korrekten Sitzhaltung eines Fahrgastes von niederer Statur einen abnehmbaren Sitzbezug (61) bildet, der ein erstes Polsterkissen (63) für den Sitz umfasst, das mittels biegsamer Scharniere (63.1) gegenüber an der Rückenlehne (Sc) des Sitzes (S) abgestützten Rahmenelementen (62) derart beweglich ist, dass es gegenüber diesen Rahmenelementen zwischen einer die Sitzbank (P) überdeckenden Betriebsstellung und einer gegen die Rahmenelemente abgestützten Ausgangsstellung geschwenkt werden kann, und ein zweites Polsterkissen (64) für den Rücken, das den erwähnten Rahmenelementen (62) entlang zwischen einer auf das erste in Betriebsstellung geschwenkte Polsterkissen herabgeklappten Stellung und einer nach oben geklappten Stellung verstellbar ist, wobei das zweite Polsterkissen starre Seitenflügel (64.2) aufweist, die wahlweise zwischen einer geschlossenen Betriebsstellung und einer geöffneten Ausgangsstellung derart schwenkbar sind, dass die beiden Polsterkissen (63, 64) und die Seitenflügel in ihren Betriebsstellungen eine Art Mulde zur sicheren seitlichen Abstützung und korrekten Sitzhaltung eines Fahrgastes von niederer Statur bilden, während sie in ihrer Ausgangsstellung eine Abstützung für einen Fahrgast von normaler bzw. grösserer Statur bilden.

17. Vorrichtung nach Anspruch 16, dadurch **gekennzeichnet**, dass das erste in Betriebsstellung auf die Sitzbank (P) geklappte Polsterkissen (63) Mittel (63.4) zur Ablenkung des Schrägtrums (C1) des Sicherheitsgurtes (C) aufweist, welche Mittel z.B. als Haken ausgebildet sind und den Verlauf des Quertrums (C2) des angelegten Sicherheitsgurtes (C) überdecken und diesen derart lösbar festhalten, dass derselbe gegenüber seinem Verlauf bei frei liegendem Sicherheitsgurt (C) abhängig von der Lage der Hüften eines den Sitz (S) besetzenden Fahrgastes von niederer Statur nach unten abgelenkt wird.

18. Vorrichtung nach Anspruch 16, dadurch **gekennzeichnet**, dass der erwähnte Sitzbezug (61) eine Kopfstütze (65) trägt, die gegenüber den erwähnten Rahmenmitteln (62) derart verstellbar ist, dass ihre Höhe gegenüber dem Sitz (S) veränderbar ist, wobei die Kopfstütze (65) Mittel (65.3) zur Ablenkung des Schrägtrums (C1) des angelegten Sicherheitsgurtes (C) nach unten aufweist.

19. Vorrichtung nach Anspruch 1 oder 2, dadurch **gekennzeichnet**, dass die erwähnte Struktur (40) zur seitlichen Abstützung und korrekten Sitzhaltung eines Fahrgastes von niederer Statur mit dem Tragrahmen der Rückenlehne (Sc) des Sitzes (S) fest verbunden ist.

20. Vorrichtung nach Anspruch 1 oder 2, dadurch **gekennzeichnet**, dass die erwähnte Struktur (50) zur seitlichen Abstützung und korrekten Sitzhaltung eines Fahrgastes von niederer Statur mit der Polsterung und/oder dem Überzug der Rückenlehne (Sc) des Sitzes (S) fest verbunden ist.

21. Vorrichtung nach Anspruch 1 oder 2, dadurch **gekennzeichnet**, dass die erwähnte Struktur zur seitlichen Abstützung und korrekten Sitzhaltung eines Fahrgastes von niederer Statur mit einem äusseren, an die Rückenlehne (Sc) des Sitzes (S) angebrachten Überzug oder Futter fest verbunden ist.

## Claims

1. Apparatus for securing a relatively small passenger on a vehicle seat equipped with a seat belt, the fastened seat belt forming at least one obliquely directed shoulder strap and a transversely directed lumbar-region strap, and the apparatus having a structure which serves for the lateral support and for the correct sitting posture of a relatively small passenger, is anchored in a stable manner on the backrest of the seat and can assume an operating position, in which it has means for deflecting the oblique strap and the transverse strap of the fastened seat belt downwards, depending on the level of the trunk and on the position of the hips of the relatively small passenger occupying the seat, characterized in that, by virtue of side wings being swung, the apparatus can assume an initial position, in which said structure does not obstruct an adult passenger who is of normal height or is relatively tall from using the seat (S) in the correct position.

2. Apparatus according to Claim 1, characterized in that the abovementioned structure for the lateral support and correct sitting posture of a relatively small passenger has at least one pair of rigid side wings (14; 24; 33; 42; 55; 64.2; 72.3), which are each arranged on either side of the passenger and may optionally be swung between an initial position, in which they serve as a support against the backrest (Sc) for a seated passenger who is of normal height or who is relatively tall, and an operating position, in which they are arranged next to the sides/hips of the seated, relatively small passenger and in the vicinity of the seat bench (P), which forms the actual seat, and in which the side wings extend over the transverse strap (C2) of the seat belt (C) such that the transverse strap (C2) is gripped by said side wings and, in relation to the manner in which said transverse strap extends when the seat belt (C) is free, is deflected downwards, depending on the position of the hips of a relatively small passenger occupying the seat (S).

3. Apparatus according to Claim 2, characterized in that the rigid side wings (24, 33, 42, 55) extend essentially up to the level of the upper border of the backrest (Sc) of the seat (S), such that they also form a lateral headrest in each case for a relatively small passenger.

4. Apparatus according to Claim 2, characterized in that the rigid side wings (72.3) extend essentially up to the level of the upper border of the backrest (Sc) of the seat (S) and make it possible to fit a removable headrest (73) for a relatively small passenger occupying the seat.

5. Apparatus according to Claim 2 or 3, characterized in that means (26, 34) are provided in order to deflect the oblique strap (C1) of the fastened seat belt (C) downwards, which means are fastened to the side wing (24, 33, 42, 55) in the vicinity of the upper end of the oblique strap (C1) and are fastened on the side wing at such a level with respect to the seat (S) that the oblique strap (C1), of the seat belt (C), secured in a detachable manner by the abovementioned deflection means is displaced in the direction of the shoulder of the relatively small passenger occupying the seat.

6. Apparatus according to Claim 5, characterized in that the abovementioned deflection means (26, 34) are designed in the manner of a hook and are fastened in a detachable manner on the abovementioned side wing.

7. Apparatus according to Claim 1 or 2, characterized by a headrest (17, 65, 73) which is arranged, with respect to the seat (S), at a level which can be changed depending on the height of the seated, relatively small passenger, and has means (18, 65.3, 73.3/74) for deflecting the oblique strap (C1) of the fastened seat belt (C) downwards, which means are fixed in the vicinity of the upper end of the oblique strap (C1), the oblique strap being secured in a detachable manner by the above-mentioned deflection means and being routed in the direction of the shoulder of the relatively small passenger occupying the seat (S).

8. Apparatus according to Claim 7, characterized in that the abovementioned deflection means are designed in the manner of a hook (18, 65.3) of an elastic clamp (73.3/74), as a result of which the oblique strap (C1) of the fastened seat belt (C) can be secured and drawn out in the direction of the front of the vehicle.

9. Apparatus according to Claim 1 or 2, characterized in that the abovementioned structure for the lateral support and correct sitting posture of a relatively small passenger forms a removable seat attachment (11, 21, 31, 61, 71).

10. Apparatus according to Claim 9, characterized in that the abovementioned seat attachment (11, 21) is reinforced by frame elements (13, 23) which are fitted on the backrest (Sc) of the seat (S) and on which the side wings (14, 24) are articulated.

11. Apparatus according to Claim 9, characterized in that the abovementioned seat attachment (31, 71) is formed by a lining (32, 72) on which the rigid side wings (33, 72.3) are articulated by means of flexible hinges.

12. Apparatus according to Claim 2 or 9, characterized in that, as soon as they are located in the swung-in initial position, the side wings (14) form a support for the lumbar region of a passenger occupying the seat (S).

13. Apparatus according to Claim 10, characterized in that the abovementioned seat attachment (11) bears a headrest (17) which can be adjusted (guides 17.2) with respect to the frame elements (13, 13.3) such that its level with respect to the seat (S) can be changed, the headrest (17) having means (18) for deflecting the oblique strap (C1) of the fastened seat belt (C) downwards.

14. Apparatus according to Claim 9, characterized in that the abovementioned seat attachment (71) is formed by a lining (72) on which the rigid side wings (72.3), which preferably extend over the entire height of the backrest (Sc) of the seat (S), are articulated by means of flexible hinges, while, when the side wings have been swung into the operating position, a removable headrest (73) can be fitted at the desired level, and said headrest has means (73.3/74) for deflecting the oblique strap (C1) of the fastened seat belt (C).

15. Apparatus according to Claim 14, characterized in that the abovementioned headrest (73) is located with sufficient room between the side wings (72.3) swung into the operating position, and the headrest comprises a reinforced cushion which forms a neck support (73.2) and two fixed side supports (73.3) for the head of the seated passenger, the side supports (73.3) each bearing an elastically flexible plate (74) on their outer surface, and said plate being fixed centrally with respect to the reinforcement (73.1) of said support such that each plate (74) forms an elastic double clamp together with the associated side support (73.3), as a result of which the headrest (73), in the used position, can be fastened in a detachable manner at the desired level with respect to the side wings (72.3), the side wings being forced in between the side supports (73.3) and one leg of the associated elastic plate (74), while a central part of the oblique strap (C1) of the seat belt (C) is fixed in a detachable manner between the other leg of said plate, in the vicinity of the upper end of said oblique strap (C1), and the associated side support (73.3), and this central part can be easily drawn out in the direction of the front of the vehicle in the event of the latter being involved in an accident.

16. Apparatus according to Claim 1 or 2, characterized in that the abovementioned structure for the lateral support and correct sitting posture of a relatively small passenger forms a removable seat attachment (61) which is made up of a first cushion (63) for the seat, which cushion can be moved, by means of flexible hinges (63.1), with respect to frame elements (62) supported on the backrest (Sc) of the seat (S), such that it can be swung, with respect to said frame elements, between an operating position, in which it extends over the seat bench (P), and an initial position, in which it is supported against the frame elements, and of a second cushion (64) for the back, which cushion can be adjusted, along the above-mentioned frame elements (62), between a position in which it has been pivoted onto the first cushion swung into the operating position and a position in which it has been pivoted upwards, the second cushion having rigid side wings (64.2) which may optionally be swung between a closed operating position and an open initial position, such that the two cushions (63, 64) and the side wings form, in their operating positions, a type of cradle to ensure the lateral support and correct sitting posture of a relatively small passenger, while, in their initial position, they form a support for a passenger who is of normal height or who is relatively tall.

17. Apparatus according to Claim 16, characterized in that the first cushion (63), pivoted onto the seat bench (P) and into the operating position, has means (63.4) for deflecting the transverse strap (C2) of the seat belt (C), which means are designed, for example, as hooks and extend over the transverse strap (C2) of the fastened seat belt (C) and secure the same in a releasable manner such that, in relation to the manner in which said transverse strap extends when the seat belt (C) is free, it is deflected downwards, depending on the position of the hips of a relatively small passenger occupying the seat (S).

18. Apparatus according to Claim 16, characterized in that the abovementioned seat attachment (61) bears a headrest (65) which can be adjusted with respect to the abovementioned frame means (62) such that its level with respect to the seat (S) can be changed, the headrest (65) having means (65.3) for deflecting the oblique strap (C1) of the fastened seat belt (C) downwards.

19. Apparatus according to Claim 1 or 2, characterized in that the abovementioned structure (40) for the lateral support and correct sitting posture of a relatively small passenger is firmly connected to the carrying frame of the backrest (Sc) of the seat (S).

20. Apparatus according to Claim 1 or 2, characterized in that the abovementioned structure (50) for the lateral support and correct sitting posture of a relatively small passenger is firmly connected to the upholstery and/or the covering of the backrest (Sc) of the seat (S).

21. Apparatus according to Claim 1 or 2, characterized in that the abovementioned structure for the lateral support and correct sitting posture of a relatively small passenger is firmly connected to an outer covering or lining fitted on the backrest (Sc) of the seat (S).

## Revendications

1. Dispositif pour retenir un passager de petite stature sur un siège de véhicule équipé d'une ceinture de sécurité, dans lequel la ceinture de sécurité forme, lorsqu'elle est mise, au moins une section d'épaule orientée en diagonale et une section au niveau des reins orientée transversalement, et dans lequel le dispositif présente une structure servant au support latéral et au maintien en position assise correcte d'un passager de petite stature, ancrée de manière stable au dossier du siège et pouvant être mise en position de fonctionnement, dans laquelle elle présente des moyens pour dévier vers le bas la section en diagonale et la section transversale de la ceinture de sécurité lorsqu'elle est mise, en fonction de la hauteur du tronc et de la position des hanches du passager de petite stature occupant le siège, caractérisé en ce qu'en rabattant des ailes latérales, le dispositif peut être mis dans une position initiale dans laquelle cette structure n'empêche pas un passager adulte de stature normale ou plus grande d'utiliser le siège (S) dans la position appropriée.

2. Dispositif selon la revendication 1, caractérisé en ce que ladite structure, destinée au support latéral et au maintien en position assise correcte d'un passager de petite stature, présente au moins une paire d'ailes latérales rigides (14; 24; 33; 42; 55; 64.2; 72.3), qui sont chacune disposées d'un côté du passager et peuvent être rabattues au besoin, d'une position initiale dans laquelle elles servent de support contre le dossier (Sc) pour un passager assis de stature normale ou plus grande, à une position de fonctionnement, dans laquelle elles sont disposées près des côtés/hanches du passager de petite stature assis et à proximité de la banquette (P), qui forme le siège proprement dit, et dans laquelle les ailes latérales croisent le trajet de la section transversale (C2) de la ceinture de sécurité (C) de telle sorte que la section transversale (C2) soit engagée par ces ailes latérales et soit déviée vers le bas, par rapport à son trajet dans le cas de la ceinture de sécurité (C) posée librement, en fonction de la position des hanches d'un passager de petite stature occupant le siège (S).

3. Dispositif selon la revendication 2, caractérisé en ce que les ailes latérales rigides (24, 33, 42, 55) s'étendent essentiellement jusqu'à la hauteur du bord supérieur du dossier (Sc) du siège (S) de telle sorte qu'elles forment, pour un passager de petite stature, à chaque fois aussi un support latéral pour la tête.

4. Dispositif selon la revendication 2, caractérisé en ce que les ailes latérales rigides (72.3) s'étendent essentiellement jusqu'à la hauteur du bord supérieur du dossier (Sc) du siège (S) et permettent d'installer un appuie-tête amovible (73) pour un passager de petite stature qui occupe le siège.

5. Dispositif selon la revendication 2 ou 3, caractérisé en ce que l'on prévoit, pour dévier vers le bas la section en diagonale (C1) de la ceinture de sécurité (C) lorsqu'elle est mise, des moyens (26, 34) qui sont fixés près de l'extrémité supérieure de la section en diagonale (C1) avec l'aile latérale (24, 33, 42, 55) et à l'aile latérale à une hauteur par rapport au siège (S), de telle sorte que la section en diagonale (C1) de la ceinture de sécurité (C) retenue de manière séparable par lesdits moyens de déviation, soit décalée dans la direction des épaules du passager de petite stature occupant le siège.

6. Dispositif selon la revendication 5, caractérisé en ce que lesdits moyens de déviation (26, 34) sont conçus à la manière d'un crochet et sont fixés de manière séparable à ladite aile latérale.

7. Dispositif selon la revendication 1 ou 2, caractérisé par un appuie-tête (17, 65, 73), qui est disposé à une certaine hauteur par rapport au siège (S), variable en fonction de la grandeur du passager de petite stature assis et présente des moyens (18, 65.3, 73.3/74) pour dévier vers le bas la section en diagonale (C1) de la ceinture de sécurité (C) lorsqu'elle est mise, lesquels moyens sont fixés près de l'extrémité supérieure de la section en diagonale (C1), la section en diagonale étant retenue de manière séparable par lesdits moyens de déviation et étant déviée dans la direction des épaules du passager de petite stature occupant le siège (S).

8. Dispositif selon la revendication 7, caractérisé en ce que lesdits moyens de déviation sont conçus à la manière d'un crochet (18, 65.3) d'une pince élastique (73.3/74), grâce auquel la section en diagonale (C1) de la ceinture de sécurité (S) lorsqu'elle est mise peut être retenue et étirée dans la direction de l'avant du véhicule.

9. Dispositif selon la revendication 1 ou 2, caractérisé en ce que ladite structure pour le support latéral et le maintien en position assise correcte d'un passager de petite stature forme une housse de siège amovible (11, 21, 31, 61, 71).

10. Dispositif selon la revendication 9, caractérisé en ce que ladite housse de siège (11, 21) est renforcée par des éléments de cadre (13, 23) appliqués au dossier (Sc) du siège (S), auxquels les ailes latérales (14, 24) sont articulées.

11. Dispositif selon la revendication 9, caractérisé en ce que ladite housse de siège (31, 71) est formée par une doublure (32, 72) à laquelle sont articulées les ailes latérales rigides (33, 72.3) au moyen de charnières flexibles.

12. Dispositif selon la revendication 2 ou 9, caractérisé en ce que les ailes latérales (14) forment un support du côté des reins pour un passager occupant le siège (S), dès qu'elles se trouvent dans la position initiale rabattue vers l'intérieur.

13. Dispositif selon la revendication 10, caractérisé en ce que ladite housse de siège (11) porte un appuie-tête (17), qui est déplaçable (guides 17.2) par rapport aux éléments de cadre (13, 13.3) de telle sorte que sa hauteur par rapport au siège (S) puisse être modifiée, l'appuie-tête (17) présentant des moyens (18) pour dévier vers le bas la section en diagonale (C1) de la ceinture de sécurité (S) lorsqu'elle est mise.

14. Dispositif selon la revendication 9, caractérisé en ce que ladite housse de siège (71) est formée par une doublure (72) à laquelle sont articulées, au moyen de charnières flexibles, les ailes latérales rigides (72.3) s'étendant de préférence sur toute la hauteur du dossier (Sc) du siège (S), tandis que pour les ailes latérales rabattues dans la position de fonctionnement, un appuie-tête amovible (73) peut être installé à la hauteur souhaitée et présente des moyens (73.3/74) pour dévier la section en diagonale (C1) de la ceinture de sécurité (S) lorsqu'elle est mise.

15. Dispositif selon la revendication 14, caractérisé en ce que ledit appuie-tête (73) trouve une place adaptée entre les ailes latérales (72.3) rabattues dans la position de fonctionnement et se compose d'un coussin rembourré renforcé, qui forme un support pour la nuque (73.2) et deux supports latéraux (73.3) fixes pour la tête du passager assis, les supports latéraux (73.3) portant chacun sur leur face externe une feuille élastiquement flexible (74) et celle-ci étant fixée en position intermédiaire par rapport au renfort (73.1) de ce support, de telle sorte que chaque feuille (74) forme, conjointement avec les supports latéraux associés (73.3) une double pince élastique, grâce à laquelle l'appuietête (73) peut être fixé de manière séparable à la hauteur souhaitée dans la position d'utilisation par rapport aux ailes latérales (72.3), où l'aile latérale est serrée entre les supports latéraux (73.3) et un côté de la feuille élastique associée (74), tandis qu'entre l'autre côté de cette feuille à proximité de l'extrémité supérieure de la section transversale (C1) de la ceinture de sécurité (C) et le support latéral associé (73.3), est fixée, de manière séparable, une partie intermédiaire de cette section transversale (C1), qui peut être étirée facilement dans la direction de l'avant du véhicule dans le cas d'un accident de la route.

16. Dispositif selon la revendication 1 ou 2, caractérisé en ce que ladite structure pour le support latéral et le maintien en position assise correcte d'un passager de petite stature forme une housse de siège amovible (61), qui comprend un premier coussin rembourré (63) pour le siège, qui est déplaçable au moyen de charnières flexibles (63.1) par rapport à des éléments de cadre (62) supportés contre le dossier (Sc) du siège (S) de telle sorte qu'il puisse être rabattu par rapport à ces éléments de cadre entre une position de fonctionnement recouvrant la banquette (P) et une position initiale supportée contre les éléments de cadre, et un deuxième coussin rembourré (64) pour le dos, qui, le long desdits éléments de cadre (62), est déplaçable entre une position basculée vers le bas sur le premier coussin rembourré rabattu dans la position de fonctionnement, et une position basculée vers le haut, le deuxième coussin rembourré présentant des ailes latérales rigides (64.2), qui peuvent être rabattues au choix entre une position de fonctionnement fermée et une position initiale ouverte, de telle sorte que les deux coussins rembourrés (63, 64) et les ailes latérales forment, dans leurs positions de fonctionnement, une espèce de cuvette pour le support latéral sûr et le maintien en position assise correcte d'un passager de petite stature, tandis qu'ils forment dans leur position initiale un support pour un passager de stature normale ou plus grande.

17. Dispositif selon la revendication 16, caractérisé en ce que le premier coussin rembourré (63) basculé dans la position de fonctionnement sur la banquette (P) présente des moyens (63.4) pour dévier la section en diagonale (C1) de la ceinture de sécurité (C), lesquels moyens sont conçue par exemple corne des crochets et croisent le trajet de la section transversale (C2) de la ceinture de sécurité (C) lorsqu'elle est mise, et retiennent celle-ci de façon desserrable de telle sorte que celle-ci soit déviée vers le bas, par rapport à son trajet dans le cas de la ceinture de sécurité (C) posée librement, en fonction de la position des hanches d'un passager de petite stature occupant le siège (S).

18. Dispositif selon la revendication 16, caractérisé en ce que ladite housse de siège (61) porte un appuie-tête (65), qui est déplaçable par rapport auxdits moyens de cadre (62) de telle sorte que leur hauteur par rapport au siège (S) puisse être modifiée, l'appuie-tête (65) présentant des moyens (65.3) pour dévier vers le bas la section en diagonale (C1) de la ceinture de sécurité (C) lorsqu'elle est mise.

19. Dispositif selon la revendication 1 ou 2, caractérisé en ce que ladite structure (40) pour le support latéral et le maintien en position assise correcte d'un passager de petite stature est reliée solidement au cadre de support du dossier (Sc) du siège (S).

20. Dispositif selon la revendication 1 ou 2, caractérisé en ce que ladite structure (50) pour le support latéral et le maintien en position assise correcte d'un passager de petite stature est reliée solidement au rembourrage et/ou à la housse du dossier (Sc) du siège (S).

21. Dispositif selon la revendication 1 ou 2, caractérisé en ce que ladite structure pour le support latéral et le maintien en position assise correcte d'un passager de petite stature est reliée solidement à une housse ou une doublure appliquée contre le dossier (Sc) du siège (S).
